# EUROPÄISCHE PATENTSCHRIFT

(11) **EP 0 692 635 B1**
(45) Veröffentlichungstag und Bekanntmachung des Hinweises auf die Patenterteilung: **08.09.1999**
(21) Anmeldenummer: 95115221.4
(22) Anmeldetag: 27.03.1990
(51) Int. Cl.: F04C 29/10

(54) **Mehrstufige trockenverdichtende Vakuumpumpe und Verfahren zu ihrem Betrieb**
Multistage dry compressing vacuum pump and method for its operation
Pompe à vide multiétagée avec compression à sec et son procédé de fonctionnement

(43) Veröffentlichungstag der Anmeldung: 17.01.1996
(62) Teilanmeldung aus: 90105783.6
(73) Patentinhaber: Balzers und Leybold Deutschland Holding Aktiengesellschaft, 63450 Hanau (DE)
(72) Erfinder: Bachmann, Paul, Dr., D-50858 Köln (DE); Brenner, Lothar, D-53902 Bad Münstereifel (DE); Kriehn, Hartmut, D-50997 Köln (DE); Kuhn, Monika, Dr., D-50672 Köln (DE)
(74) Vertreter: Leineweber, Jürgen, Dipl.-Phys.

(56) Entgegenhaltungen:
- EP-A- 0 272 767
- EP-A- 0 338 764
- US-A- 2 971 691
- US-A- 3 535 058

## Beschreibung

Die Erfindung bezieht sich auf ein Verfahren zum Betrieb einer mehrstufigen, trockenverdichtenden Vakuumpumpe mit einem Einlaß und einem Auslaß, bei welchem die angesaugten Gase gasförmige Bestandteile enthalten, die den Betrieb der Vakuumpumpe gefährden. Außerdem bezieht sich die Erfindung auf eine für die Durchführung dieses Betriebsverfahrens geeignete Vakuumpumpe.

Mehrstufige trockenverdichtende Vakuumpumpen sind aus der DE-OS 31 47 824 sowie der DE-OS 32 44 099 bekannt. Werden Pumpen dieser oder ähnlicher Art allein oder in Kombination mit einer weiteren Vakuumpumpe, beispielsweise einer Hochvakuumpumpe, zur Evakuierung von Kammern eingesetzt, in denen Ätz-, Beschichtungs- oder andere Vakuumbehandlungs- oder Vakuumherstellprozesse ablaufen, dann geschieht es häufig, daß Feststoffe in die Pumpe gelangen. Diese führen in trockenverdichtenden Vakuumpumpen mit kleinen Spalten zu Schichtbildungen, so daß es zu Abrasionen, Spielaufzehrungen und damit zu erhöhten Verschleißerscheinungen kommt. Diese haben reduzierte Standzeiten der Vakuumpumpen zur Folge.

Eine solche Vakuumpumpe, bei welcher die angesaugten Gase die Pumpe gefährdende gasförmige Bestandteile enthalten, ist in der EP-A-338 764 gemäß Oberbegriff des Anspruchs 1 beschrieben.

Die Abscheidung und Bildung von Feststoffen kann aufgrund chemischer Reaktionen von Bestandteilen der abzupumpenden Gase untereinander, durch Reaktionen von Gasbestandteilen an den Oberflächen und/oder durch katalytische Effekte erfolgen. Neben derartigen chemischen Reaktionen können Feststoffbildungen auch durch Aggregatzustandsänderungen infolge eines Druckanstieges oder einer Abkühlung eintreten.

Aus der EP-A-272 767 ist eine mehrstufige Vakuumpumpe bekannt, die zur Beseitigung von Spielaufzehrungen durch thermische Effekte mit Kühlern ausgerüstet ist. Der eine Pumpstufe verlassende Gasstrom wird geteilt. Der eine Teil wird komprimiert, ein anderer Teil dient zunächst der Temperierung des Gehäuses und wird dann gekühlt.

Der vorliegenden Erfindung liegt die Aufgabe zugrunde, ein Verfahren zum Betrieb einer Vakuumpumpe der eingangs genannten Art anzugeben, bei dem die durch die geschilderten Reaktionen hervorgerufenen Beeinträchtigungen des Spiels zwischen den Rotoren und dem Gehäuse der Vakuumpumpe vermieden sind.

Erfindungsgemäß wird diese Aufgabe dadurch gelöst, daß die aus der Vakuumkammer abgesaugten, die Vakuumpumpe durchströmenden Gase durch einen Reaktionsraum geführt werden, in welchem die die Vakuumpumpe gefährdenden Bestandteile bei einem zwischen dem Ansaugdruck und dem Auslaßdruck der Vakuumpumpe liegenden Druck derart physikalisch behandelt werden, daß sie ihre schädliche Wirkung verlieren und daß sie entweder unmittelbar oder nach einer Reaktion im Reaktionsraum zurückgehalten werden.

Die vorliegende Erfindung geht von der Erkenntnis aus, daß eine chemische Behandlung der aus einer Vakuumkammer abzusaugenden Dämpfe vor dem Eintritt der Gase in die Vakuumpumpe (also bei Einlaßdruck) mit dem Ziel, die die Vakuumpumpe gefährdenden Bestandteile unschädlich zu machen, nur schwierig durchführbar ist. Unter den im Einlaßbereich der Vakuumpumpe herrschenden Druckverhältnissen laufen die erforderlichen Reaktionen nur sehr langsam ab, es sei denn, daß extreme Bedingungen, wie z. B. sehr hohe Temperaturen, lange Verweilzeiten oder hochreaktive Reaktionspartner geschaffen werden, mit deren Hilfe die Reaktionen beeinflußt werden. Derartige Maßnahmen sind aufwendig und kostspielig. Außerdem können sie negative Auswirkungen auf die Betriebssicherheit und das Saugvermögen der Vakuumpumpe haben. Auch unerwünschte chemische Nebenreaktionen sind nicht ausgeschlossen.

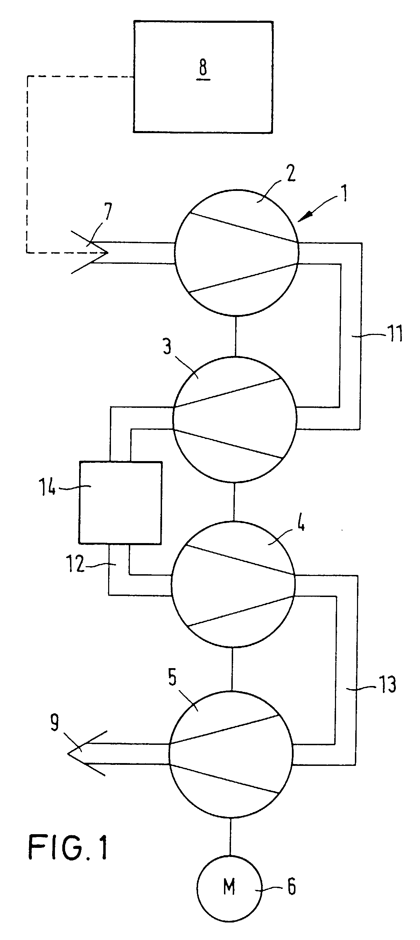

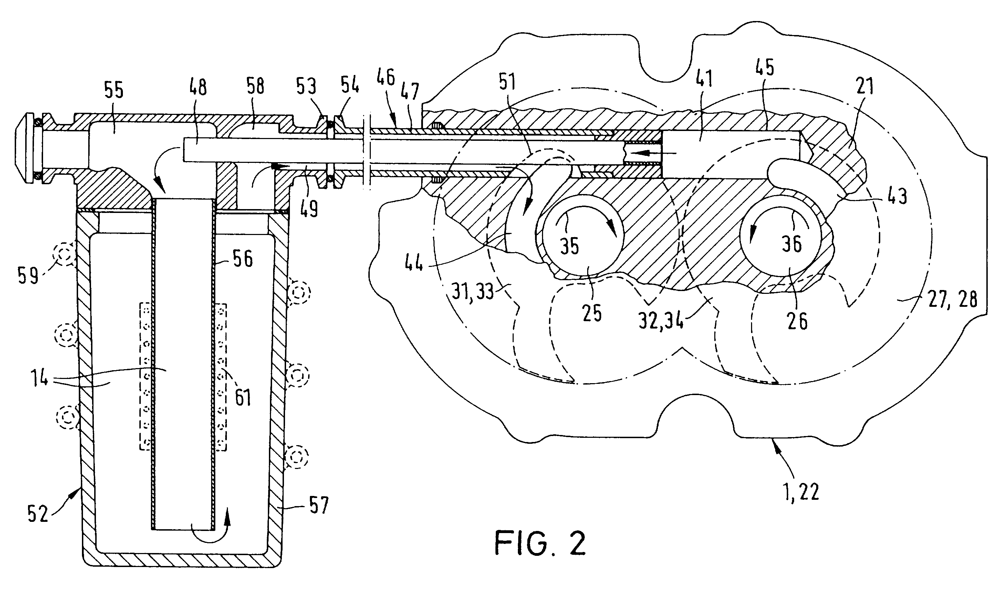

Weitere Vorteile und Einzelheiten der Erfindung sollen anhand von in den Figuren 1 und 2 dargestellten Ausführungsbeispielen erläutert werden. Es zeigen:
- Figur 1 schematisch eine mehrstufige Vakuumpumpe mit einem Reaktor nach der Erfindung und
- Figur 2 einen Teilschnitt durch das Lagerschild einer Klauenrotor-Pumpe sowie durch einen zwei Stufen dieser Klauenrotor-Pumpe miteinander verbindenden Reaktor.

Die Vakuumpumpe 1 nach Figur 1 hat vier Stufen 2 bis 5. Die innerhalb der Stufen befindlichen Rotoren werden von einem gemeinsamen Motor 6 angetrieben. Der Einlaß 7 der ersten Stufe 2 der Vakuumpumpe 1 ist an ein als Block 8 dargestelltes Bauteil angeschlossen. Dieses Bauteil 8 kann beispielsweise eine Hochvakuumpumpe, ein Abscheider, Filter, Kondensator oder auch die Vakuumkammer selbst sein, in welcher ein Vakuumbehandlungs- oder Vakuumherstellungsprozeß durchgeführt wird. Üblicherweise pumpt die Vakuumpumpe 1 gegen Atmosphärendruck.

Die einzelnen Stufen 2 bis 5 der Vakuumpumpe 1 sind über Verbindungsleitungen 11, 12, 13 miteinander verbunden. Bei diesen Ausführungsbeispielen befindet sich zwischen den Pumpstufen 3 und 4 ein Reaktionsraum 14. Dieser Reaktionsraum 14 hat die Aufgabe, Gasbestandteile, die mit den angesaugten Gasen in die Pumpe 1 gelangen und die den Betrieb der Vakuumpumpe 1 gefährden können, unschädlich zu machen, so daß Abrasionen, Spielaufzehrungen, Korrosionen o. dgl. in den auf den Reaktionsraum 14 folgenden Pumpenstufen 4 und 5 vermieden sind.

Die Figur 2 zeigt einen Teilschnitt durch ein Lagerschild 21 einer Zweiwellenvakuumpumpe 22, deren Wellen mit 25 und 26 bezeichnet sind. Das Lagerschild 21 dient der Trennung von zwei Schöpfräumen 27, 28, welche sich neben bzw. oberhalb und unterhalb des Lagerschildes 21 befinden. Die Kontur der Schöpfräume 27, 28 ist strichpunktiert dargestellt. In diesen Schöpfräumen 27, 28 befindet sich je ein Rotorpaar 31, 32 bzw. 33, 34, deren Konturen gestrichelt dargestellt sind. Die die Rotoren tragenden Wellen 25, 26 durchsetzen das Lagerschild 21. Ihre Drehrichtung ist durch die Pfeile 35, 36 angegeben.

Um dem gepumpten Medium den Durchtritt vom einlaßseitigen Schöpfraum zum auslaßseitigen Schöpfraum zu ermöglichen, ist der Durchtrittskanal 41 vorgesehen. Dieser verbindet den stirnseitig gelegenen Auslaßschlitz 43 des einlaßseitigen Schöpfraumes mit dem ebenfalls stirnseitig gelegenen Einlaßschlitz 44 des auslaßseitigen Schöpfraumes. Auslaß 43 des einlaßseitigen Schöpfraumes und Einlaß 44 des auslaßseitigen Schöpfraumes werden von bogenförmigen Aussparungen in der Scheibe 16 gebildet. Der Kanal 41 wird von einer Sackbohrung 45 im Lagerschild 21 gebildet, welche den Auslaß 43 und den Einlaß 44 schneidet und so deren Verbindung herstellt.

Um zwischen dem Auslaß 43 des einlaßseitigen Schöpfraumes und dem Einlaß 44 des auslaßseitigen Schöpfraumes einen Reaktionsraum 14 anordnen zu können, befindet sich in der Bohrung 45 ein Doppelleitungssystem 46, das bei dem hier dargestellten Ausführungsbeispiel eine äußere Hülse 47 und ein konzentrisch darin angeordnetes Rohr 48 aufweist. Der von der Hülse 47 und dem Rohr 48 gebildete Ringraum 49 ist im Bereich des in die Bohrung 45 eingeschobenen Endes des Doppelleitungssystems 46 verschlossen, so daß die aus dem Auslaß 43 austretenden Gase in das Rohr 48 eintreten. Mit Hilfe des Rohres 48 werden diese Gase dem Reaktionsraum 14 zugeführt. Die den Reaktionsraum 14 verlassenden Gase gelangen in den Ringraum 49 und werden dem Einlaß 44 der Folgestufe zugeführt. Dazu weist die äußere Hülse 47 des Doppelleitungssystems in Höhe des Einlasses 44 eine Durchbrechung 51 auf, so daß die im Reaktionsraum 14 behandelten Gase in den vorvakuumseitigen Schöpfraum austreten können.

Der Reaktionsraum 14 befindet sich in einem externen Reaktor 52, der mit dem Doppelleitungssystem 46 bzw. mit der Hülse 47 lösbar verbunden ist. Dazu sind der Reaktor 52 und die Hülse 47 mit Flanschen 53, 54 ausgerüstet.

Der Reaktor 52 weist eine Einlaßkammer 55 auf, in die das innere Rohr 48 mündet. An den Einlaßraum 55 schließt sich ein bis in den Bodenbereich erstreckender, nach unten offener Rohrabschnitt 56 an. Der Innenraum dieses Rohrabschnittes 56 und der Ringraum zwischen diesem Rohrabschnitt 56 und dem äußeren Gehäuse 57 des Reaktors 52 bilden den Reaktorraum 14, in dem die gewünschten Reaktionen der den Betrieb der Vakuumpumpe gefährdenden Gasbestandteile herbeigeführt werden sollen. An den Ringraum schließt sich eine Austrittskammer 58 an, die mit dem Ringraum 49 des Doppelleitungssystemes 46 und damit mit dem Einlaß 44 der Folgestufe der Vakuumpumpe in Verbindung steht.

Die Behandlung der den Reaktorraum 14 durchströmenden Gase kann eine Temperaturbeeinflussung sein. Diese kann beispielsweise mittels einer auf das Gehäuse 57 des Reaktors 52 aufgebrachten Kühl- oder Heizschlange 59 oder eines am zentralen Rohrabschnitt vorgesehenen Heizmantels 61 (beides gestrichelt dargestellt) erzielt werden. Andere Behandlungen (Adsorption, Neutralisation, Katalyse o. dgl.) können mit Materialien durchgeführt werden, die in den Reaktionsraum 14 eingebracht werden.

### Beispiel 1

Behandlung der Gase durch Kühlen zur Erzielung einer Desublimation: Beim Ätzen von Aluminium oder anderen Metallen und beim Abscheiden von Siliziumverbindungen in CVD-Prozessen fallen als Prozeßgase Chloride und Fluoride an. Diese Salze bilden bei höheren Drücken und tiefen Temperaturen Feststoffe. Durch Abkühlen des Reaktors 14 kann die Abscheidung gezielt an dieser Stelle erfolgen; die entstandenen Feststoffe können in im Reaktorraum 14 befindlichen Filtermaterialien zurückgehalten werden.

### Beispiel 2

Adsorption von Gasanteilen: Beim Abpumpen korrosiver Gase wie z. B. HCl, HF, SiH₂cl₂ können sich in der Pumpe feste Korrosionsprodukte bilden. Diese Gase können an Aktivkohle, Zeolithen oder Al₂O₃ gebunden werden, das sich im Reaktorraum 14 befindet.

## Patentansprüche

1. Verfahren zum Betrieb einer mehrstufigen, trockenverdichtenden Vakuumpumpe (1) mit einem Einlaß (7) und einem Auslaß (9), bei welchem die angesaugten Gase gasförmige Bestandteile enthalten, die den Betrieb der Vakuumpumpe (1) gefährden, dadurch gekennzeichnet, daß die aus der Vakuumkammer (8) abgesaugten, die Vakuumpumpe (1) durchströmenden Gase durch einen Reaktionsraum (14) geführt werden, in welchem die die Vakuumpumpe gefährdenden Bestandteile bei einem zwischen dem Ansaugdruck und dem Auslaßdruck der Vakuumpumpe liegenden Druck derart physikalisch behandelt werden, daß sie ihre Schädlichkeit verlieren, und daß sie entweder unmittelbar oder nach einer Reaktion im Reaktionsraum (14) zurückgehalten werden.

2. Verfahren nach Anspruch 1, dadurch gekennzeichnet, daß zur Feststoffbildung neigende Bestandteile im Reaktionsraum (14) derart behandelt werden, daß eine Feststoffbildung stattfindet, und daß die gebildeten Feststoffe im Reaktionsraum zurückgehalten werden.

3. Verfahren nach Anspruch 1 oder 2, dadurch gekennzeichnet, daß für den Fall, daß als von der Vakuumpumpe (1) zu fördernde Gase Chloride oder Fluoride anfallen, der Reaktor (14) derart gekühlt wird, daß die genannten Gase im Reaktor (14) Feststoffe bilden und daß diese Feststoffe mit Hilfe von im Reaktorraum (14) befindlichen Filtermaterialien zurückgehalten werden.

4. Verfahren nach Anspruch 1 oder 2, dadurch gekennzeichnet, daß für den Fall, daß als von der Vakuumpumpe zu fördernde Gase korrosive Gase, wie HCL, HF oder SiH₂ Cl₂ anfallen, diese Gase im Reaktor (14) an Aktivkohle, Zeolithen oder Al₂ O₃ gebunden werden.

5. Mehrstufige trockenverdichtende Vakuumpumpe (1) mit einem Einlaß (7) und einem Auslaß (9), zur Durchführung eines der Verfahren nach Anspruch 1, 2, 3 oder 4, dadurch gekennzeichnet, daß ein unter einem Zwischendruck zwischen dem Einlaßdruck und dem Auslaßdruck der Vakuumpumpe stehender Reaktionsraum (14) vorhanden ist.

6. Vakuumpumpe nach Anspruch 5, dadurch gekennzeichnet, daß jede der Stufen (2 bis 5) der Vakuumpumpe jeweils einen Einlaß und einen Auslaß aufweist und daß sich der Reaktionsraum (14) zwischen dem Auslaß einer Pumpenstufe und dem Einlaß der Folgestufe befindet.

7. Vakuumpumpe nach Anspruch 5 oder 6, dadurch gekennzeichnet, daß sich der Reaktionsraum (14) in einem von der Vakuumpumpe (1) separaten Reaktor (52) befindet.

8. Vakuumpumpe nach Anspruch 7, dadurch gekennzeichnet, daß der Einlaß des Reaktors (52) an den Auslaß (43) einer Pumpenstufe angeschlossen ist und daß der Auslaß des Reaktors mit dem Einlaß (44) der Folgestufe verbunden ist.

9. Vakuumpumpe nach Anspruch 7 oder 8, dadurch gekennzeichnet, daß als Verbindung zwischen der Vakuumpumpe (1) und dem Reaktor (52) ein Doppelleitungssystem (46) vorgesehen ist.

10. Vakuumpumpe nach Anspruch 9, dadurch gekennzeichnet, daß das Doppelleitungssystem eine äußere Hülse (47) und ein darin angeordnetes Rohr (48) umfaßt.

11. Vakuumpumpe nach einem der Ansprüche 5 bis 10, dadurch gekennzeichnet, daß dem Reaktionsraum Heiz- und/oder Kühlmittel (59, 61) zugeordnet sind.

12. Vakuumpumpe nach einem der Ansprüche 6 bis 11, dadurch gekennzeichnet, daß im Reaktor (14) ein Adsorpotionsmaterial (Aktivkohle, Zeolith, Al₂ O₃) untergebracht ist.

13. Vakuumpumpe nach einem der Ansprüche 5 bis 12, dadurch gekennzeichnet, daß sie als Zweiwellenvakuumpumpe ausgebildet ist, daß die mit den Rotorpaaren ausgerüsteten Stufen über Bohrungen (45), Kanäle (41) o. dgl. miteinander verbunden sind und daß mindestens ein Reaktionsraum (14) vorgesehen ist, der Bestandteil einer Verbindungsleitung zwischen zwei Stufen ist dieser Vakuumpumpe ist.

14. Vakuumpumpe nach Anspruch 13, dadurch gekennzeichnet, daß zumindest die beiden einlaßseitigen Stufen (2, 3) der Vakuumpumpe (1) mit Klauenrotor-Paaren ausgerüstet sind, daß sich zwischen den mit Klauenrotoren ausgerüsteten Stufen Lagerschilde (21) mit Auslaß- bzw. Einlaßschlitzen (43 bzw. 44) sowie Verbindungsbohrungen (45) befinden und daß der Reaktor (52) an eine der Verbindungsbohrungen (45) über ein Doppelleitungssystem (46) angeschlossen ist.

## Claims

1. A method for operating a multi-stage dry compressing vacuum pump (1) with an inlet (7) and an outlet (9), in which the drawn gases contain gaseous components which endanger the operation of the vacuum pump (1), characterised in that the gases drawn from the vacuum chamber (8) and flowing through the vacuum pump (1) are conveyed through a reaction chamber (14), in which the components endangering the vacuum pump are physically treated at a pressure lying between the suction pressure and the outlet pressure of the vacuum pump in such a manner that they lose their harmfulness, and they are retained in the reaction chamber (14) either directly or following a reaction.

2. A method according to claim 1, characterised in that components tending to form solids are treated in the reaction chamber (14) in such a manner that a formation of solids occurs, and the formed solids are retained in the reaction chamber.

3. A method according to claim 1 or 2, characterised in that, in the presence of chloride or fluoride as gases which are to be conveyed by the vacuum pump (1), the reactor (14) is cooled in such a manner that the said gases form solids in the reactor (14) and these solids are retained with the aid of filter materials disposed in the reactor chamber (14).

4. A method according to claim 1 or 2, characterised in that, in the presence of corrosive gases as gases which are to be conveyed by the vacuum pump, such as HCL, HF or SiH₂ Cl₂, said gases are bonded in the reactor (14) to activated carbon, zeolites or Al₂ O₃.

5. A multi-stage dry compressing vacuum pump (1) with an inlet (7) and an outlet (9), for carrying out one of the methods according to claim 1, 2, 3 or 4, characterised in that a reaction chamber (14) is provided, which lies at an intermediate pressure between the inlet pressure and the outlet pressure of the vacuum pump.

6. A vacuum pump according to claim 5, characterised in that each of the stages (2 to 5) of the vacuum pump comprises an inlet and an outlet and the reaction chamber (14) is disposed between the outlet of one pump stage and the inlet of the following stage.

7. A vacuum pump according to claim 5 or 6, characterised in that the reaction chamber (14) is disposed in a reactor (52) separate from the vacuum pump (1).

8. A vacuum pump according to claim 7, characterised in that the inlet of the reactor (52) is connected to the outlet (43) of one pump stage and the outlet of the reactor is connected to the inlet (44) of the following stage.

9. A vacuum pump according to claim 7 or 8, characterised in that a double line system (46) is provided as a connection between the vacuum pump (1) and the reactor (52).

10. A vacuum pump according to claim 9, characterised in that the double line system comprises an external sleeve (47) and a pipe (48) arranged therein.

11. A vacuum pump according to one of claims 5 to 10, characterised in that heating and/or cooling means (59, 61) are associated with the reaction chamber.

12. A vacuum pump according to one of claims 6 to 11, characterised in that an absorbent material (activated carbon, zeolite, Al₂ O₃) is accommodated in the reactor (14).

13. A vacuum pump according to one of claims 5 to 12, characterised in that it is constructed as a twin-shaft vacuum pump, the stages equipped with the rotor pairs are connected to one another via bores (45), ducts (41) or the like, and at least one reaction chamber (14) is provided, which is part of a connecting line between two stages of said vacuum pump.

14. A vacuum pump according to claim 13, characterised in that at least the two stages (2, 3) of the vacuum pump (1) on the inlet side are equipped with claw rotor pairs, in that bearing brackets (21) with outlet or inlet slots (43, 44) as well as connecting bores (45) are disposed between the stages equipped with claw rotors, and the reactor (52) is connected to one of the connecting bores (45) via a double line system (46).

## Revendications

1. Procédé pour l'exploitation d'une pompe à vide à sec à plusieurs étages (1) comprenant une entrée (7) et une sortie (9), dans lequel les gaz aspirés contiennent des composants gazeux qui mettent en danger l'exploitation de la pompe à vide (1), caractérisé en ce que les gaz aspirés hors de la chambre à vide (8) et traversant la pompe à vide (1) sont menés à travers une chambre de réaction (14) dans laquelle les composants mettant en danger la pompe à vide sont traités par voie physique sous une pression située entre la pression d'aspiration et la pression de refoulement de la pompe à vide, de telle manière qu'ils perdent leur caractère nocif, et qu'ils soient retenus dans la chambre de réaction (14) soit directement soit après une réaction.

2. Procédé selon la revendication 1, caractérisé en ce que les composants qui tendent à la formation de matières solides sont traités dans la chambre de réaction (14) de telle manière qu'il se produit une formation de matières solides et que des matières solides formées sont retenues dans la chambre de réaction.

3. Procédé selon l'une ou l'autre des revendications 1 et 2, caractérisé en ce que dans le cas où les gaz à véhiculer par la pompe à vide (1) contiennent du chlore ou du fluor, le réacteur (14) est refroidi de telle façon que des gaz précités forment des matières solides dans le réacteur (14), et en ce que ces matières solides sont retenues à l'aide de matériaux filtrants situés dans la chambre de réaction (14).

4. Procédé selon l'une ou l'autre des revendications 1 et 2, caractérisé dans ce que dans le cas où les gaz à véhiculer par la pompe à vide (1) contiennent des gaz corrosifs tels que l'acide chlorhydrique, ou bien du SiH₂Cl₂, ces gaz sont liés dans le réacteur (14) sur du charbon actif, des zéolites, ou bien du Al₂O₃.

5. Pompe à vide à sec à plusieurs étages (1) comprenant une entrée (7) et une sortie (9), pour la mise en oeuvre de l'un des procédés selon les revendications 1, 2, 3 et 4, caractérisée en ce qu'il est prévu une chambre de réaction (14) qui se trouve sous une pression intermédiaire entre la pression d'entrée et la pression de refoulement de la pompe à vide.

6. Pompe à vide selon la revendication 5, caractérisée en ce que chacun des étages (2 à 5) de la pompe à vide comporte respectivement une entrée et une sortie, et en ce que la chambre de réaction (14) se trouve entre la sortie d'un étage de pompe et l'entrée de l'étage suivant.

7. Pompe à vide selon l'une ou l'autre des revendications 5 et 6, caractérisée en ce que la chambre de réaction (14) se trouve dans un réacteur (52) séparé de la pompe à vide (1).

8. Pompe à vide selon la revendication 7, caractérisée en ce que l'entrée du réacteur (52) est raccordée à la sortie (43) d'un étage de la pompe, et en ce que la sortie du réacteur est raccordée à l'entrée (44) de l'étage suivant.

9. Pompe à vide selon l'une ou l'autre des revendications 7 et 8, caractérisée en ce que l'on prévoit un système à conduite double (46) comme liaison entre la pompe à vide (1) et le réacteur (52).

10. Pompe à vide selon la revendication 9, caractérisée en ce que le système à conduite double comporte une douille extérieure (47) et un tube (48) agencé dans celle-ci.

11. Pompe à vide selon l'une des revendications 5 à 10, caractérisée en ce que des moyens de chauffage et/ou de refroidissement (59, 61) sont associés à la chambre de réaction.

12. Pompe à vide selon l'une des revendications 6 à 11, caractérisée en ce que dans le réacteur (14) est logé un matériau d'absorption (charbon actif, zéolite, Al₂O₃).

13. Pompe à vide selon l'une des revendications 5 à 12, caractérisée en ce qu'elle est réalisée comme une pompe à vide à deux arbres, en ce que les étages équipés avec les paires de rotors sont reliés les uns aux autres par des perçages (45), des canaux (41) ou similaires, et en ce qu'il est prévu au moins une chambre de réaction (14) qui fait partie d'une conduite de liaison entre deux étages de cette pompe à vide.

14. Pompe à vide selon la revendication 13, caractérisée en ce que les deux étages (2, 3) côté entrée de la pompe à vide (1) au moins sont équipés de paires de rotors à engrènement, en ce qu'il est prévu entre les étages équipée des rotors à engrènement des plaques de montage (21) avec des fentes d'entrée et de sortie (43 ; respectivement 44) ainsi que des perçages de liaison (45), et en ce que le réacteur (52) est raccordé à l'un des perçages de liaison (45) via un système à double conduite (46).
